# EUROPEAN PATENT APPLICATION

(11) **EP 2 713 253 A1**
(43) Date of publication of application: **02.04.2014**
(21) Application number: 12180771.3
(22) Date of filing: 17.08.2012
(51) Int. Cl.: G06F 3/048, G06F 21/84

(54) **Secure text entry methods for portable electronic devices**

(71) Applicant: BlackBerry Limited, Waterloo, ON N2K 0A7 (CA)
(72) Inventor: Leyon, Christofer Bengt Thure, Malmö 211 40 (SE)
(74) Representative: Moore, Barry

(57) **Abstract**

A method includes displaying information on a display of an electronic device, the information comprising an entry field (402) and a selectable obscuration feature (404) operable to be toggled between a first state and a second state (406) within the entry field (402). When the selectable obscuration feature in is the first state, characters (409) are displayed as entered in the entry field, and when the selectable obscuration feature is in the second state (406), obscuration symbols (408) are displayed in place of the characters (409) as entered in the entry field (402).

## Description

### FLELD OF TECHNOLOGY

The present disclosure relates to electronic devices including, but not limited to, portable electronic devices having entry fields and the control of placeholders for entry fields.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed.

Improvements in portable electronic devices are desirable.

### SUMMARY

A method includes displaying information on a display of an electronic device, the information comprising an entry field and a selectable obscuration feature within the entry field, the selectable obscuration feature operable to be toggled between a first state and a second state; when the current state of the selectable obscuration feature is the first state, displaying characters as entered in the entry field; and, when the current state of the selectable obscuration feature is the second state, displaying obscuration symbols in place of the characters as entered in the entry field.

An electronic device includes a touch-sensitive display and at least one processor coupled to the touch-sensitive display and configured to display information on a display of the electronic device, the information comprising an entry field and a selectable obscuration feature within the entry field, the selectable obscuration feature operable to be toggled between a first state and a second state; display characters as entered in the entry field when the current state of the selectable obscuration feature is the first state; and display obscuration symbols in place of the characters as entered in the entry field when the current state of the selectable obscuration feature is the second state.

### BRIEF DESCRIPTION OF THE DRAWINGS

Embodiments of the present disclosure will now be described, by way of example only, with reference to the attached figures, wherein:

FIG. 1 is a block diagram of a portable electronic device in accordance with an example;

FIG. 2 is a flowchart illustrating an example of a method of providing a secure information entry field on an electronic device;

FIG. 3 is a flowchart illustrating another example of a method of providing a secure information entry field on an electronic device; and

FIG. 4 through FIG. 7 are views illustrating examples of a secure information entry field on an electronic device in accordance with the methods of FIG. 2 and FIG. 3.

### DETAILED DESCRIPTION

The following describes an electronic device and method including displaying information on a display of an electronic device, the information comprising an entry field and a selectable obscuration feature operable to be toggled between a first state and a second state within the entry field. When the selectable obscuration feature in is the first state, characters are displayed as entered in the entry field, and when the selectable obscuration feature is in the second state, obscuration symbols are displayed in place of the characters as entered in the entry field.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

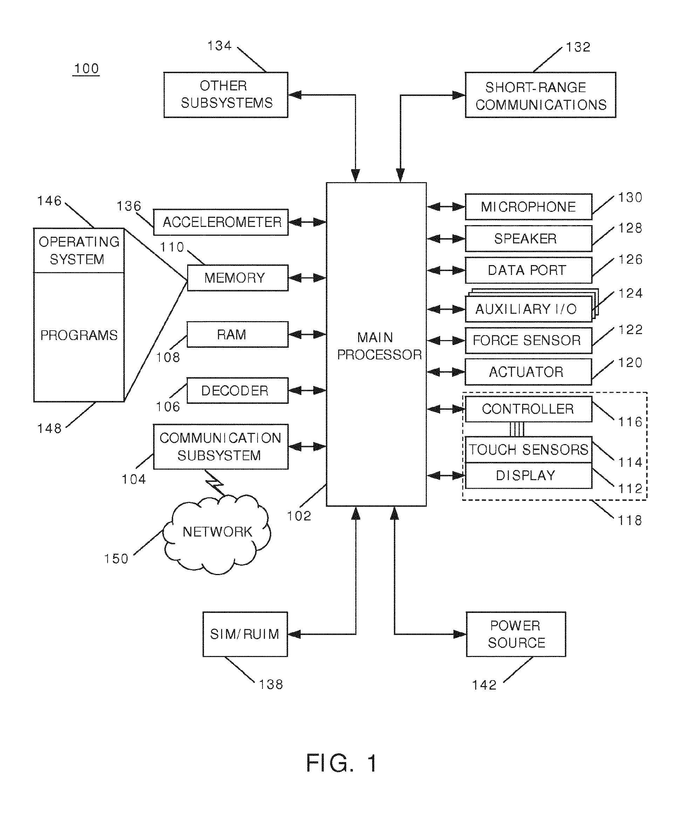

A block diagram of an example of a portable electronic device 100, also referred to as an electronic device 100 or a device 100, is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an optional actuator 120, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 1 00 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing. The processor 102 may also interact with an accelerometer 136 to detect direction of gravitational forces or gravity-induced reaction forces that may determine the tilt of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at generally unchanged location over a period of time or a touch associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zoom ing.

Forms, such as online or web forms, typically include entry fields and labels and/or other instructions describing the input, particularly text input, to be entered in each entry field. Common forms include such entry fields and corresponding labels as "Name", "Email", "Mobile Number", "User ID", "Password", etc. Such forms may be used to sign-in to online services, to complete online orders, to provide address or contact information, to submit search queries, and the like. Such forms may also be used to provide information to applications such as a calendar, contacts or address book applications. In this specification, an entry field, also referred to as a text field, text box, or input element, is a graphical user interface element that receives entered text input or character input from the user. The entry field may be a single-line or multi-line entry field. A selected entry field may receive text input from any suitable keyboard such as a QWERTY keyboard, QWERTZ keyboard, AZERTY keyboard, and so forth. The keyboard may be a physical keyboard or a virtual keyboard, and includes a plurality of keys that are associated with characters, symbols, and the like, that may be entered utilizing the keyboard. A selected entry field may also receive input by other means, such as for example a numerical input pad, a speech recognition application, or any other input source.

Forms sometimes include one or more text entry fields into which secure or confidential information is to be entered. For example, entry fields for passwords are often configurable to obscure the characters being entered by replacing them with other characters or symbols, such as a string of asterisks, bullets, dots, or the like. When entering passwords or other secure information there is a tradeoff between the text being obscured and the certainty that the user has entered the text correctly. In some cases each character of the password might be shown for a short time before turning into an asterisk (or other symbol). In other cases an asterisk is shown for every character entered without ever showing the character to the user. In the former case, the user may miss the short visual cue if they are not looking at the display, and in the latter case the user never knows if they have entered the password correctly until they try to proceed and submit the password.

It is known to provide a selectable option to show the password (i.e. in full without being replaced by asterisk). In a typical prior case there is a button or checkbox near (e.g. below) the password entry field and an associated description regarding what the button or checkbox is for (e.g. show password). However, in mobile devices screen area is at a premium and these additional buttons and descriptors occupy additional space beyond the entry field. In addition, as the number of GUI elements increases so too does the complexity of how such elements are laid out in the GUI on the screen and as a result it is more time consuming to redesign the layout for different situations (e.g., different form factors and/or orientations).

Improved methods and systems for entering secure information into entry fields are desirable.

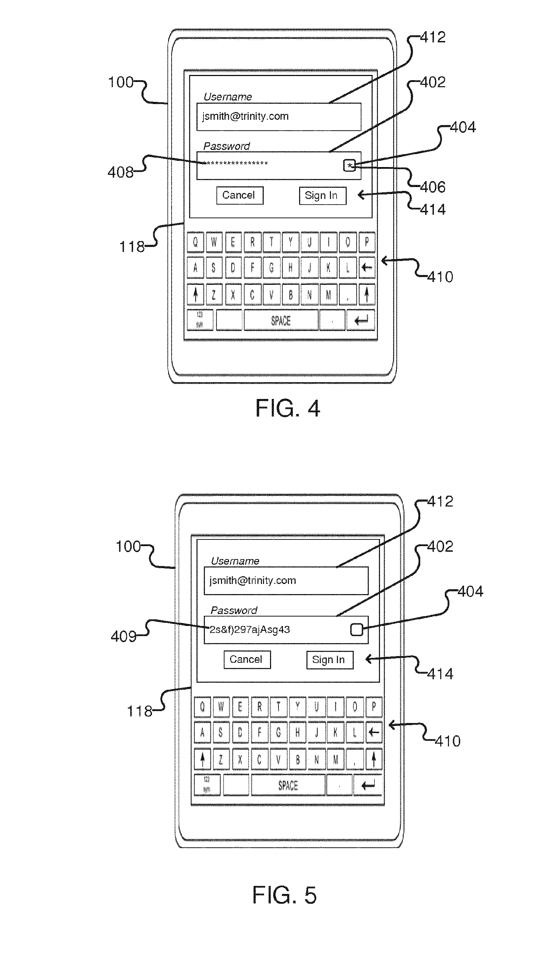

Advantageously, embodiments disclosed herein provide a selectable obscuration feature within an entry field which may be selected by the user to toggle between two states - one state wherein the entered characters are displayed and one state wherein obscuration symbols are displayed in place of the entered characters. In some embodiments, the selectable obscuration feature is combined with and positioned within the password text entry field, such that there is just one element that needs to be positioned in the GUI design, and only one element needs to be considered when redesigning the layout for different form factors or orientations. For example, in one embodiment a checkbox is included within a password text entry field, which is operable to toggle the password between asterisks and actual letters as shown in FIG. 4 and FIG. 5 and discussed further below. In some embodiments, the selectable obscuration feature includes an obscuration symbol (e.g. an asterisk) when in a character obscuring state, and is blank when in a character displaying state. The asterisk symbol is enough (when the password is being displayed as a number of asterisks) to demonstrate that there is an option to turn off the obscuration and show the password.

One advantage provided by certain embodiments is that no text that usually accompanies a button or check box (e.g. "Show password") is required. Typically, text within forms needs to be translated into different languages for use in different countries, reducing the amount of text in a form reduces the overhead for providing translations in different languages. Another advantage is that by integrating the selectable obscuration feature inside the entry field, the connection or bond between the entry field and the functionality of the selectable obscuration feature becomes stronger, thus easing the cognitive load of having to (in prior solutions), first; read a label next to the checkbox, and second; connect the label and checkbox to an entity close by (in this case the text field for passwords, which again is identifiable only by a label). Another advantage is space savings. Providing the selectable obscuration feature inside the entry field takes up less space on the display than having a checkbox underneath or above the entry field.

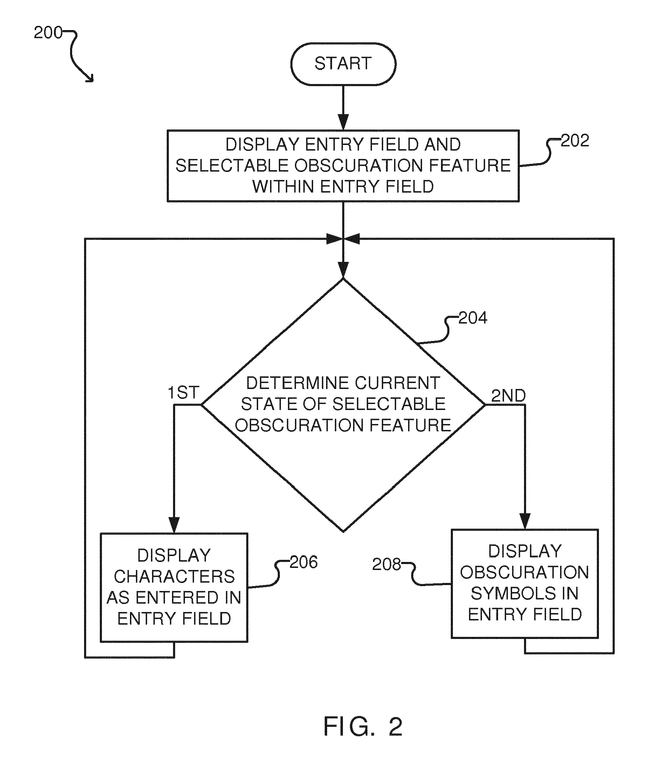

A flowchart illustrating an example of method 200 of providing an entry field for entry of secure information on an electronic device, such as the electronic device 100, is shown in FIG. 2. The method 200 and methods according to other embodiments may, for example, be carried out by software executed by processor 102. Coding of software for carrying out such methods is within the scope of a person of ordinary skill in the art given the present description. The methods may contain additional or fewer processes than shown and/or described, and may be performed in a different order. Computer-readable code executable by at least one controller or processor of the portable electronic device to perform the methods may be stored in a computer-readable storage medium, such as a non-transitory computer-readable medium.

Information including an entry field and a selectable obscuration feature within the entry field is displayed on the touch-sensitive display 118 at 202. The selectable obscuration feature is operational or toggleable between a character displaying state (also referred to as the first state) and an obscuring state (also referred to as the second state). In some embodiments, the selectable obscuration feature is initially displayed in the obscuring state. In some embodiments, the selectable obscuration feature is initially displayed in the character displaying state. In some embodiments, the selectable obscuration feature is initially displayed in a most recently used state (e.g., the processor 102 may retrieve a most recent state from the RAM 108 or the memory 110 which was stored the last time the method 200 was invoked).

At 204 the processor 102 determines the current state of the selectable obscuration feature. When the selectable obscuration feature is in the first state, at 206 the processor 102 displays the characters as entered by a user in the entry field. When the selectable obscuration feature is in the second state, at 208 the processor 102 displays obscuration symbols in place of the characters as entered in the entry field. The user is thus provided with the option of either displaying or obscuring secure information entered in the entry field by toggling between the two states of the selectable obscuration feature.

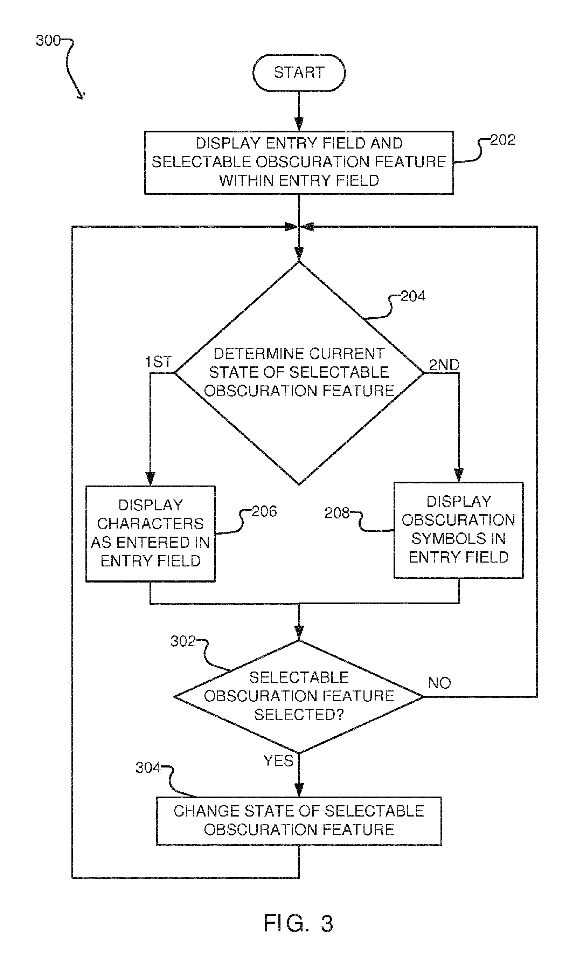

FIG. 3 show a flowchart of another example method 300 of providing an entry field for entry of secure information on an electronic device. The method 300 has a number of features in common with the method 200 of FIG. 2 that are identified with the same reference numbers and will not be described again. In the method 300, the selectable obscuration feature is toggled between the first and second states whenever the user selects the selectable obscuration feature. At 302 the processor 102 determines whether the selectable obscuration feature has been selected. As long as the selectable obscuration feature is not selected, the processor cycles through 302, 204 and one of 206 and 208 (depending on the current state of the selectable obscuration feature). When the processor detects a selection of the selectable obscuration feature (e.g. by detecting a touch on the touch-sensitive display 118 at the selectable obscuration feature), at 304 the state of the selectable obscuration feature is changed and the method returns to 204.

FIG. 4 and FIG. 5 show an example portable electronic device 100 with a selectable obscuration feature in different states according to an example embodiment. Information is displayed on the touch-sensitive display 118 including a secure information entry field 402 having a selectable obscuration feature 404 therein. In the illustrated example, the secure information entry field 402 is a password field, and the selectable obscuration feature 404 is positioned at the right end of the secure information entry field 402. In other embodiments, the secure information entry field 402 could be a different type of field, and/or the selectable obscuration feature 404 could be positioned at different locations within the secure information entry field 402. Other information is also displayed on the touch-sensitive display in FIG. 4 and FIG. 5, including a virtual keyboard 410, another entry field 412 (e.g. a username field), and a plurality of buttons 414.

In FIG. 4, the selectable obscuration feature 404 is in an obscuring state, and obscuration symbols 408 are displayed in the entry field 402. A single obscuration symbol 406 is displayed within the selectable obscuration feature 404 to indicate the obscuring state in the embodiment of FIG. 4. In other embodiments, different means may be used to indicate the state of the selectable obscuration feature 404, such as for example, a check mark or other symbol, different fill colors or patterns, and the like. In FIG. 5, the selectable obscuration feature 404 is in a character displaying state, and characters as entered 409 are displayed in the entry field 402.

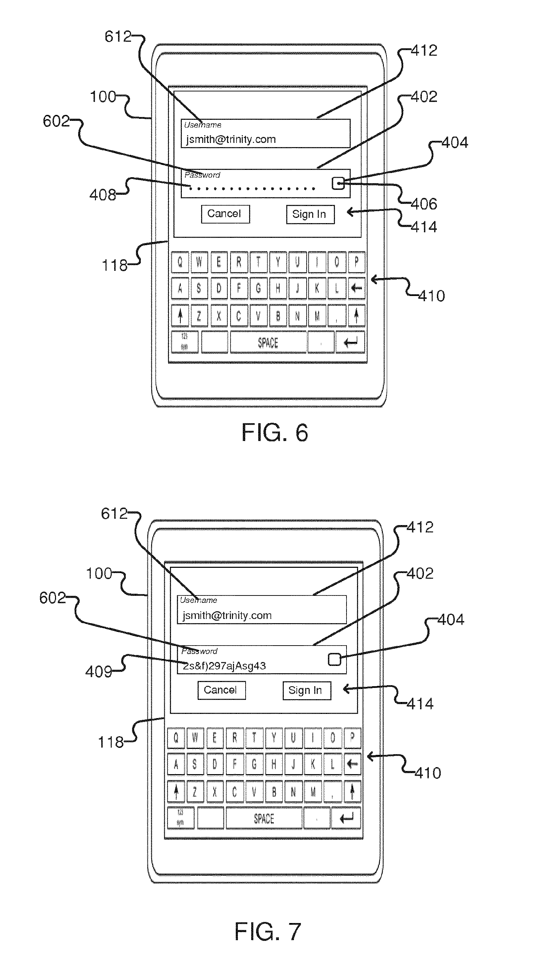

FIG. 6 and FIG. 7 show another embodiment similar to the example discussed above with respect to FIG. 4 and FIG. 5. In FIG. 6 and FIG. 7, bullets are used as obscuration symbols 406 and 408, and a reduced size placeholder 602 is used to identify secure information entry field 402. Another reduced size placeholder 612 is used to identify the other entry field 412. Use of the reduced sized placeholders 602 and 612 eliminates the need for labels for fields 402 and 412, providing further space saving. Implementation of reduced size placeholders and other placeholders is described US Patent Application No. 13/483,309 filed May 30, 2012 and entitled PORTABLE ELECTRONIC DEVICE INCLUDING A PLACEHOLDER FOR AN ENTRY FIELD AND METHOD OF CONTROLLING SAME which is hereby incorporated by reference herein. Such placeholders may be used in various permutations and combinations with a secure information entry field 402 as described herein.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying information on a display of an electronic device, the information comprising an entry field and a selectable obscuration feature within the entry field, the selectable obscuration feature operable to be toggled between a first state and a second state;
when the current state of the selectable obscuration feature is the first state, displaying characters as entered in the entry field; and,
when the current state of the selectable obscuration feature is the second state, displaying obscuration symbols in place of the characters as entered in the entry field.

2. A method according to claim 1, wherein the electronic device comprises a touch-sensitive display, the method comprising changing the state of selectable obscuration feature in response to detecting a touch on the touch-sensitive display at the selectable obscuration feature.

3. A method according to claim 1 or claim 2, wherein the entry field comprises a password field.

4. A method according to any one of claims 1 to 3, wherein the selectable obscuration feature is displayed at the right end of the entry field.

5. A method according to any one of claims 1 to 4, comprising displaying a single obscuration symbol within the selectable obscuration feature when the selectable obscuration feature is in the second state.

6. A method according to any one of claims 1 to 5, wherein an initial state of the selectable obscuration feature is the second state.

7. A computer-readable medium having computer-readable code executable by at least one processor of a portable electronic device to perform the method according to any one of claims 1 to 6.

8. An electronic device comprising:
a touch-sensitive display;
at least one processor coupled to the touch-sensitive display and configured to display information on a display of the electronic device, the information comprising an entry field and a selectable obscuration feature within the entry field, the selectable obscuration feature operable to be toggled between a first state and a second state; display characters as entered in the entry field when the current state of the selectable obscuration feature is the first state; and display obscuration symbols in place of the characters as entered in the entry field when the current state of the selectable obscuration feature is the second state.

9. An electronic device according to claim 8, wherein the processor is configured to change the state of selectable obscuration feature in response to detecting a touch on the touch-sensitive display at the selectable obscuration feature.

10. An electronic device according to claim 8 or claim 9, wherein the entry field comprises a password field.

11. An electronic device according to any one of claims 8 to 10, wherein the processor is configured to display the selectable obscuration feature at the right end of the entry field.

12. An electronic device according to any one of claims 8 to 11, wherein the processor is configured to display a single obscuration symbol within the selectable obscuration feature when the selectable obscuration feature is in the second state.

13. An electronic device according to any one of claims 8 to 12, wherein the processor is configured to initially set the selectable obscuration feature to the second state.
